# EUROPEAN PATENT APPLICATION

(11) **EP 2 305 494 A1**
(43) Date of publication of application: **06.04.2011**
(21) Application number: 10173152.9
(22) Date of filing: 18.08.2010
(51) Int. Cl.: B60H 1/00

(54) **Thermodynamic cycle system for a vehicle**

(30) Priority: 30.09.2009 JP 2009225942
(71) Applicant: Hitachi Ltd., Tokyo 100-8280 (JP)
(72) Inventor: Arai, Masatsugu, Tokyo 100-8220 (JP); Nasu, Shingo, Tokyo 100-8220 (JP); Matsushima, Hiroaki, Tokyo 100-8220 (JP); Kotani, Masanao, Tokyo 100-8220 (JP); Komatsu, Tomohiro, Tokyo 100-8220 (JP); Sekiya, Sachio, Tokyo 100-8220 (JP)
(74) Representative: MERH-IP Matias Erny Reichl Hoffmann

(57) **Abstract**

A thermodynamic cycle system for a moving vehicle, including a refrigeration cycle system through which a refrigerant flows, a first heat-transferring system through which a heat-transferring medium flows, the heat-transferring medium being used for adjusting temperatures of heat-liberation components (100, 200, 300), a second heat-transferring system through which a heat-transferring medium flows, the heat-transferring medium being used for adjusting an indoor air state, an intermediate heat exchanger (6a) provided between the refrigeration cycle system and the first heat-transferring system, an intermediate heat exchanger (6b) provided between the refrigeration cycle system and the second heat-transferring system, an indoor heat exchanger (5a) provided in the first heat-transferring system, and an indoor heat exchanger (5b) provided in the second heat-transferring system.

## Description

### BACKGROUND OF THE INVENTION

The present invention relates to a thermodynamic cycle system set up on a moving vehicle.

As conventional technologies concerning a thermodynamic cycle system set up on a moving vehicle, there have been known technologies disclosed in, e.g., JP-A-2008-230594 and JP-A-8-258548. In JP-A-2008-230594, there is disclosed the technology for enhancing the heating capability as follows: An electric heater is provided on the refrigeration cycle system. Then, the heat occurring in a heating cycle of the refrigeration cycle and the heat generated by the electric heater are co-used simultaneously, thereby enhancing the heating capability. Also, in JP-A-8-258548, there is disclosed the technology for enhancing the heating capability as follows: The heat exchange is performed between a cooling liquid, which receives the heat released from a heat-liberation component, and a refrigerant of the refrigeration cycle. In this way, the heat released from the heat-liberation component is taken advantage of as the heat source at the time of the heating operation of the refrigeration cycle, thereby enhancing the heating capability.

### SUMMARY OF THE INVENTION

The air-conditioning system set up on the moving vehicle is not equipped with an energy source which is specifically dedicated to the air-conditioning system itself.
Accordingly, the air-conditioning system must be activated based on some other energy source, such as, e.g., an energy source for activating the heat-liberation component. Namely, the air-conditioning system must be activated by using the energy fed from this different energy source as an energy source for its own activation. Also, in the case where, like the technology disclosed in JP-A-2008-230594, the electric heater is set up on the air-conditioning system, the electric heater must also be activated by using the energy fed from the energy source for activating the heat-liberation component. In view of these circumstances, if the activation of the heat-liberation component is wished to be increased, it is necessary to lower the capability of the air-conditioning system, and thereby to suppress the energy that is taken out by the air-conditioning system from the energy source for the heat-liberation component (i.e., the energy consumed by the air-conditioning system).

In order to increase the activation of the heat-liberation component without lowering the capability of the air-conditioning system, the following scheme is conceivable: Namely, like the technology disclosed in, e.g., JP-A-8-258548, the energy-saving implementation of the air-conditioning system is accomplished by configuring a system where the heat released from the heat-liberation component can be taken advantage of as the heat source at the time of the heating operation of the refrigeration cycle. This scheme makes it possible to suppress the energy taken out by the air-conditioning system from the energy source for the heat-liberation component. Nevertheless, in the system configuration where, like the technology disclosed in JP-A-8-258548, the exhaust heat is utilized in a secondary manner, the following drawbacks are conceivable: Namely, the utilization efficiency lowers in accompaniment with the conversion of the thermal energy, and the energy-saving effect lowers accordingly. Here, the exhaust-heat utilization in the secondary manner is such that the exhaust heat from the heat-liberation component is collected into the refrigeration cycle, and after that, the exhaust heat is utilized for the air conditioning. These circumstances require the construction of a system configuration which allows an enhancement in the energy-saving effect.

The heat-liberation component is cooled via a process where a cooling medium collects the heat liberated therefrom. This cooling process adjusts the temperature of the heat-liberation component into a tolerable temperature range. Also, the output of the heat-liberation component changes in an instantaneous manner due to a variation in the load. Then, in accompaniment with this change in the output, the heat-liberation amount of the component changes. In order to operate the heat-liberation component with a high efficiency, it is preferable to always maintain the temperature of the heat-liberation component at an appropriate temperature by changing the cooling capability of the heat-liberation component in correspondence with the change in the heat-liberation amount (i.e., temperature) of the heat-liberation component. In order to change the cooling capability of the heat-liberation component, it is conceivable to make the temperature of the cooling medium variable by changing flow velocity of the cooling medium or wind amount of the air, and changing the heat-exchange amount between the air and the cooling medium. In the heat exchange between the air and the cooling medium, however, the temperature of the cooling medium cannot be lowered down to a temperature which is lower than the temperature of the air. As a result, if, e.g., at the high-temperature time in summer, the heat-liberation amount (i.e., temperature) of the heat-liberation component has increased, it becomes increasingly difficult to permit the temperature of the heat-liberation component to come closer to the appropriate temperature, at which the heat-liberation component can operate with a high efficiency. These circumstances require that the cooling capability of the heat-liberation component can be made variable without being influenced by the peripheral environment's state. Also, at the low-temperature time in winter, these circumstances require that the temperature of the heat-liberation component can be adjusted into the appropriate temperature at which the heat-liberation component can operate with a high efficiency, i.e., the heat-liberation component can be heated.

According to one of the aspects of the present inventions, it is provided with a moving vehicle thermodynamic cycle system which allows the accomplishment of the energy-saving implementation of the indoor air conditioning, and which allows the enhancement in the adjustment functionality for the temperature of the heat-liberation component.

According to another aspect of the present invention, it is provided with a thermodynamic cycle system, including a thermodynamic cycle circuit which is separated into a primary-side thermodynamic cycle circuit for performing heat exchange with an outdoor side, and a secondary-side thermodynamic cycle circuit for performing heat exchange with an indoor side and a heat-liberation component side, wherein the primary-side thermodynamic cycle circuit is constituted with a refrigeration cycle system, the secondary-side thermodynamic cycle circuit being constituted with two heat-transferring systems through which heat-transferring media flow independently of each other, an intermediate heat exchanger being provided between the refrigeration cycle system and each of the two heat-transferring systems, so that a refrigerant of the refrigeration cycle system and the heat-transferring medium of each of the two heat-transferring systems can perform the heat exchange with each other, an indoor heat exchanger being further provided in each of the two heat-transferring systems for performing the heat exchange with the heat-liberation component side, so that the heat-transferring medium of each of the two heat-transferring systems for performing the heat exchange with the heat-liberation component side, and air which is taken into the indoor side can perform the heat exchange with each other.

According to one of the representative present inventions, the thermal energy that is obtained by the temperature adjustment of the heat-liberation component is utilized for the indoor air conditioning. This feature makes it possible to accomplish the minimization of the energy needed for the indoor air conditioning, thereby allowing the accomplishment of the energy-saving implementation of the indoor air conditioning. What is more, according to the one of the representative present inventions, the thermal energy obtained by the temperature adjustment of the heat-liberation component is directly utilized for the indoor air conditioning. This feature allows the enhancement in the energy-saving effect on the indoor air conditioning. Consequently, according to the one of the representative present inventions, it becomes possible to suppress the energy taken out by the air-conditioning system from the energy source for the heat-liberation component.

Also, according to further aspect of the present invention, the thermal energy that is used for the indoor air conditioning is utilized for the temperature adjustment of the heat-liberation component. This feature makes it possible to make a wide-range adjustment of the temperature of the heat-transferring media for adjusting the temperature of the heat-liberation component. This wide-range adjustment allows the temperature of the heat-liberation component to be made variable without being influenced by the peripheral environment's state. Consequently, according to the one of the representative present inventions, it becomes possible to adjust the temperature of the heat-liberation component into an appropriate temperature at which the heat-liberation component can operate with a high efficiency. This feature permits the heat-liberation component to operate with the high efficiency.

Other objects, features and advantages of the invention will become apparent from the following description of the embodiments of the invention taken in conjunction with the accompanying drawings.

### BRIEF DESCRIPTION OF THE DRAWINGS

Fig. 1 is a piping channel diagram for illustrating the configuration of a thermodynamic cycle system according to a first embodiment of the present invention;
Fig. 2 is a piping channel diagram for illustrating the piping channel illustrated in Fig. 1 in a manner where a distinction is made between a primary-side thermodynamic cycle channel and a secondary-side thermodynamic cycle channel;
Fig. 3 is an explanatory diagram for explaining the operation of the thermodynamic cycle system illustrated in Fig. 1, and a piping channel diagram for illustrating the operation of the thermodynamic cycle system at the time of its cooling operation;
Fig. 4 is an explanatory diagram for explaining the operation of the thermodynamic cycle system illustrated in Fig. 1, and a piping channel diagram for illustrating the operation of the thermodynamic cycle system at the time of its heating operation and at the time of the steady driving of the electric driving system for an electric vehicle;
Fig. 5 is an explanatory diagram for explaining the operation of the thermodynamic cycle system illustrated in Fig. 1, and a piping channel diagram for illustrating the operation of the thermodynamic cycle system at the time of its heating operation and at the time of the cooling operation of the electric driving system for the electric vehicle;
Fig. 6 is an explanatory diagram for explaining the operation of the thermodynamic cycle system illustrated in Fig. 1, and a piping channel diagram for illustrating the operation of the thermodynamic cycle system at the time of its cooling-dehumidifying operation;
Fig. 7 is an explanatory diagram for explaining the operation of the thermodynamic cycle system illustrated in Fig. 1, and a piping channel diagram for illustrating the operation of the thermodynamic cycle system at the time of its heating-dehumidifying operation;
Fig. 8 is an explanatory diagram for explaining the operation of the thermodynamic cycle system illustrated in Fig. 1, and a piping channel diagram for illustrating the operation of the thermodynamic cycle system at the time of its heating-dehumidifying operation;
Fig. 9 is a piping channel diagram for illustrating the configuration of the thermodynamic cycle system according to a second embodiment of the present invention;
Fig. 10 is an explanatory diagram for explaining the operation of a pressure reducer at the time of the cooling-dehumidifying operation and at the time of the heating-dehumidifying operation of the thermodynamic cycle system illustrated in Fig. 8;
Fig. 11 is a piping channel diagram for illustrating the configuration of the thermodynamic cycle system according to a third embodiment of the present invention;
Fig. 12 is a piping channel diagram for illustrating the configuration of the thermodynamic cycle system according to a fourth embodiment of the present invention; and
Fig. 13 is a block diagram for illustrating the configuration of a motor-driving system of the electric vehicle which sets up therein the thermodynamic cycle system according to whatever embodiment of the first to fourth embodiments of the present invention.

### DESCRIPTION OF THE EMBODIMENTS

Hereinafter, the explanation will be given below concerning embodiments of the present invention.

In the embodiments which will be explained hereinafter, the explanation will be given selecting, as its example, a case where the present invention is applied to the thermodynamic cycle system of a pure electric vehicle. Here, the pure electric vehicle refers to an electric vehicle in which an electric motor is employed as its only driving source.

The configurations of the embodiments which will be explained hereinafter may also be applied to thermodynamic cycle systems of electrically-driven vehicles in which engine, i.e., internal-combustion engine, and electric motor are employed as their driving sources. Examples of such vehicles are hybrid car (passenger car), freight automobile such as hybrid truck, and omnibus car such as hybrid bus.

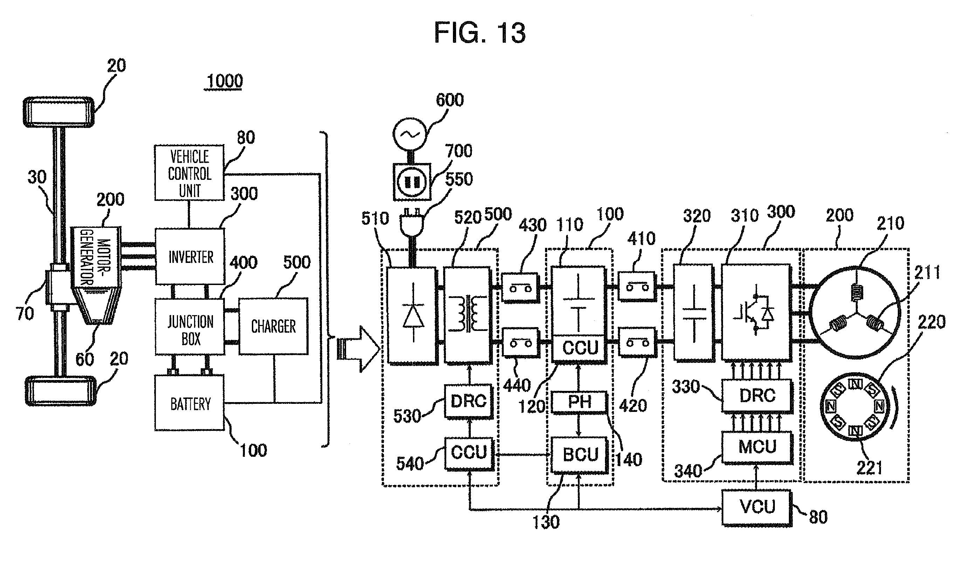

First, referring to Fig. 13, the explanation will be given below concerning a motor-driving system of the pure electric vehicle (which, hereinafter, will be referred to as "EV" simply) to which the thermodynamic cycle system of the present invention is applied.

Fig. 13 illustrates the configuration of a driving system of the EV 1000, and the electrical connection configuration of respective components of the motor-driving system, which constitutes a partial portion of the above-described driving system.

Incidentally, in Fig. 13, thick solid lines indicate the electrical system, and thin solid lines indicate the electronic system.

An axles 30 is disposed on the front portion or rear portion of the vehicle body whose illustration is omitted. A pair of driving wheels 20 are provided on both ends of the axle 30. Although the illustration is omitted, on both ends of another axle 30 a pair of trailing wheels are provided on the rear portion or front portion of the vehicle body. In the EV 1000 illustrated in Fig. 13, the front-wheel driving system is illustrated where the driving wheels 20 are front wheels, and where the trailing wheels are rear wheels. The present invention may be applied to a rear-wheel driving system where the driving wheels 20 are the rear wheels, and where the trailing wheels are the front wheels.

A differential gear (which, hereinafter, will be referred to as "DEF") 70 is provided at the central portion of the axle 30. The axle 30 is mechanically connected onto the output side of the DEF 70. The output shaft of a transmission 60 is mechanically connected onto the input side of the DEF 70. The DEF 70 is a differential-type driving-power distribution mechanism for distributing a rotational driving force, which is transmitted from the transmission 60 in a manner of being varied thereby, to the axles 30 extending at the right and left of the DEF 70. The output side of a motor-generator 200 is mechanically connected onto the input side of the transmission 60.

The motor-generator 200 is a rotation electric machinery which includes an armature (corresponding to a stator in the EV 1000 illustrated in Fig. 13) 210, and a field (corresponding to a rotor in the EV 1000 illustrated in Fig. 13) 220. Here, the armature 210 is equipped with an armature winding 211. The field 220 is opposed to the armature 210 with a gap therebetween, and is equipped with a permanent magnet 221. The motor-generator 200 functions as the motor at the time of power running of the EV 1000, and functions as a generator at the time of regeneration thereof.

In the case where the motor-generator 200 functions as the motor, the electric energy stored in a battery 100 is fed to the armature winding 211 via an inverter device 300. This electric energy fed causes an electromagnetic interaction to occur between the armature 210 and the field 220, thereby allowing the motor-generator 200 to generate a rotational driving power (i.e., mechanical energy). The rotational driving power outputted from the motor-generator 200 is transmitted to the axle 30 via the transmission 60 and the DEF 70, thereby driving the driving wheels 20.

In the case where the motor-generator 200 functions as the generator, the mechanical energy (i.e., rotational driving power) transmitted from the driving wheels 20 is transmitted to the motor-generator 200, thereby driving the motor-generator 200. Driving the motor-generator 200 in this way causes the magnetic flux of the field 220 to penetrate the armature winding 211 in a chain-like manner, thereby inducing an electric voltage. This electric voltage induced allows the motor-generator 200 to generate the electric power. The electric power outputted from the motor-generator 200 is fed to the battery 100 via the inverter device 300, thereby charging the battery 100.

The motor-generator 200, and the armature 210 in particular, are adjusted by the thermodynamic cycle system (which will be described later) so that their temperatures will fall into a tolerable temperature range. The armature 210 is a heat-liberation component, and accordingly is required to be cooled. Simultaneously, if the peripheral temperature is low, raising the temperature of the motor-generator 200 becomes necessary in some cases so that the predetermined electrical characteristics become obtainable.

The motor-generator 200 is driven in such a manner that the electric power between the armature 210 and the battery 100 is controlled by the inverter device 300. Namely, the inverter device 300 is a control device for controlling the motor-generator 200. The inverter device 300 is a power conversion device for converting the electric power from DC power to AC power, or from AC power to DC power on the basis of switching operations of switching semiconductor elements. The inverter device 300 includes a power module 310, a driving circuit 330 for driving the switching semiconductor elements implemented on the power module 310, an electrolytic capacitor 320 which is electrically connected to the DC side of the power module 310 in parallel thereto, and which smoothes the DC voltage, and a motor control unit 340 for generating a switching instruction for the switching semiconductor elements implemented on the power module 310, and outputting a signal corresponding to this switching instruction to the driving circuit 330.

The power module 310 forms a power conversion circuit having the following structure. Six switching semiconductor elements are implemented on the substrate. The six switching elements are electrically connected to each other using a conductor such as aluminum wire, such that two switching semiconductor elements for upper-arm and lower-arm are electrically connected to each other in series, thereby forming three of such series circuits (corresponding to the arms by the amount of one phase) electrically connected to each other in parallel (i.e., three-phase bridge connection) for three phases..

The element used as each switching semiconductor element is a Metal-Oxide-Semiconductor Field-Effect Transistor (MOSFET), or an Insulating-Gate Bipolar Transistor (IGBT). Here, when configuring the power conversion circuit using the MOSFET, a parasite diode exists between the drain electrode and the source electrode. Accordingly, a diode element need not be implemented therebetween newly and separately. Meanwhile, when configuring the power conversion circuit using the IGBT, no diode element exists between the collector electrode and the emitter electrode. Consequently, newly and separately, the diode element needs to be electrically connected therebetween in inversely-parallel to each other.

The opposite side (i.e., collector-electrode side in the case of the IGBT) to the lower-arm connection side of each upper arm is guided out to the outside from the DC side of the power module 310, then being electrically connected to the positive-pole side of the battery 100. The opposite side (i.e., emitter-electrode side in the case of the IGBT) to the upper-arm connection side of each lower arm is guided out to the outside from the DC side of the power module 310, then being electrically connected to the negative-pole side of the battery 100. An intermediate point between the respective arms, i.e., a connection point of the lower-arm connection side of the upper arm (i.e., emitter-electrode side of the upper arm in the case of the IGBT) and the upper-arm connection side of the lower arm (i.e., collector-electrode side of the lower arm in the case of the IGBT), is guided out to the outside from the AC side of the power module 310, then being electrically connected to the winding of the corresponding phase of the armature winding 211.

The electrolytic capacitor 320 is used for suppressing a voltage variation which is caused to occur by the high-speed switching operations of the switching semiconductor elements and an inductance existing in the power conversion circuit in a parasitic manner. Namely, the electrolytic capacitor 320 is a smoothing capacitor for eliminating the AC component contained in the DC component. As the smoothing capacitor, a film capacitor is also usable instead of the electrolytic capacitor 320.

The motor control unit 340 is the following electronic circuit device: The motor control unit 340 receives a motor-torque command signal outputted from a vehicle control unit 80 for centralizing and exercising the control over the entire vehicle. Then, based on the signal, the device 340 generates a switching command signal (e.g., PWM (Pulse Width Modulation) signal) with respect to the six switching semiconductor elements, then outputting the switching command signal to the driving circuit 330.

The driving circuit 330 is the following electronic circuit device: The driving circuit 330 receives the switching command signal outputted from the motor control unit 340. Then, based on the signal, the device 330 generates a driving signal for the six switching semiconductor elements, then outputting the driving signal to the gate electrodes of the six switching semiconductor elements.

The inverter device 300, and the power module 310 and the electrolytic capacitor 320 in particular, are adjusted by the thermodynamic cycle system (which will be described later) so that their temperatures will fall into a tolerable temperature range. The power module 310 and the electrolytic capacitor 320 are heat-liberation components, and accordingly are required to be cooled. Simultaneously, if the peripheral temperature is low, raising the temperature of the inverter device 300 becomes necessary in some cases so that the predetermined operation characteristics and electrical characteristics become obtainable.

The vehicle control unit 80 generates the motor-torque command signal with respect to the motor control unit 340, then outputting the motor-torque command signal to the motor control unit 340. This generation is performed based on a plurality of state parameters for indicating the operation state of the vehicle, such as torque request from the driver and speed of the vehicle.

The battery 100, which constitutes a driving power-supply for the motor-generator 200, is a high-voltage battery of 200-V-or-more nominal output voltage. The battery 100 is electrically connected to the inverter device 300 and a charger 500 via a junction box 400. The battery employed as the cell unit of the battery 100 is a lithium ion battery.

Incidentally, the other storage batteries that are also employable as the cell unit of the battery 100 are lead-acid battery, nickel-hydrogen battery, electric double-layer capacitor, and hybrid capacitor.

The battery 100 is the storage-battery device that is charged/discharged by the inverter device 300 and the charger 500. The battery 100 includes a cell unit 110 and a control unit as its main parts.

The cell unit 110, which is a storage for electric energy, is constituted from a plurality of lithium ion cells. These lithium ion cells allow the storage and release of the electric energy (i.e., charge/discharge of the DC electric power), and are electrically connected to each other in series. The cell unit 110 is electrically connected to the inverter device 300 and the charger 500.

The control unit is an electronic control device constituted from a plurality of electronic circuit components. The control unit manages and controls the state of the cell unit 110, and provides a tolerable charge/discharge amount to the inverter device 300 and the charger 500 thereby to control the input/output of the electric energy into/from the cell unit 110.

The electronic control device is constituted in a manner of being divided into two hierarchies in terms of its function. Namely, the electronic control device includes a battery control unit 130, which is equivalent to a higher-order device (i.e., parent) inside the battery 100, and a cell control unit 120, which is equivalent to a lower-order device (i.e., child) seen from the battery control unit 130.

The cell control unit 120 operates as a competent servant of the battery control unit 130 in accordance with an command signal outputted from the battery control unit 130. The cell control unit 120 includes a plurality of cell management units for managing and controlling the state of each of the plurality of lithium ion cells. Each of the plurality of cell management units is constituted with a plurality of integrated circuits (ICs). When the plurality of lithium ion cells, which are electrically connected to each other in series, are classified into several groups, the plurality of ICs are provided in correspondence with each of these groups, and detect the voltage and the over charge/discharge abnormality of each of the plurality of lithium ion cells owned by each corresponding group. Simultaneously, if there is a variation in the charge states among the plurality of lithium ion cells owned by each corresponding group, the ICs discharge a lithium ion cell whose charge state is larger than a predetermined charge state. In this way, the ICs manage and control the state of each of the plurality of lithium ion cells owned by each corresponding group, so that the charge states among the plurality of lithium ion cells owned by each corresponding group will be equalized to each other.

The battery control unit 130 is the following electronic control device: The battery control unit 130 manages and controls the state of the cell unit 110, and notifies the vehicle control unit 80 or the motor control unit 340 about the tolerable charge/discharge amount thereby to control the input/output of the electric energy into/from the cell unit 110. The battery control unit 130 includes a state detection unit, which is a computation processing unit such as microcomputer or digital signal processor.

A plurality of signals are inputted into the state detection unit of the battery control unit 130. These plurality of inputted signals are as follows: Measurement signals outputted from a current measurement unit for measuring the charge/discharge current of the cell unit 110, a voltage measurement unit for measuring the charge/discharge voltage of the cell unit 110, and a temperature measurement unit for measuring the temperatures of the cell unit 110 and the several lithium ion cells, a detection signal outputted from the cell control unit 120, and being about inter-terminals voltages of the plurality of lithium ion cells, an abnormality signal outputted from the cell control unit 120, an ON/OFF signal based on the operation of an ignition-key switch, and the signal outputted from the vehicle control unit 80 or the motor control unit 340, i.e., the higher-order device.

The state detection unit of the battery control unit 130 executes a plurality of computations including a computation for detecting states such as the SOC (State Of Charge) state and SOH (State Of Health) state of the cell unit 110, a computation for balancing the charge states of the plurality of lithium ion cells, and a computation for controlling the charge/discharge amount of the cell unit 110. These computations are executed based on the information obtained from the above-described plurality of inputted signals, previously set characteristics information on the lithium ion cells, and computation information needed for the computations. Moreover, based on these computation results, the state detection unit of the battery control unit 130 generates and outputs a plurality of signals including an command signal with respect to the cell control unit 120, a signal about the tolerable charge/discharge amount for controlling the charge/discharge amount of the cell unit 110, a signal about the SOC of the cell unit 110, and a signal about the SOH of the cell unit 110.

Also, based on the abnormality signal outputted from the cell control unit 120, the state detection unit of the battery control unit 130 generates and outputs a plurality of signals including an command signal for cutting off primary positive-pole side and negative-pole side relays 410 and 420, and a signal for notifying the abnormal state.

The existence of a signal transmission path allows the battery control unit 130 and the cell control unit 120 to perform the transmission/reception of a signal to each other. The device 130 and the device 120, however, are electrically insulated to each other. This is because their operation power-supplies differ from each other, and because their reference potentials differ from each other. On account of this, an insulator 140, such as a photo coupler, capacitive coupling element, and transformer, is provided on the signal transmission path which connects between the battery control unit 130 and the cell control unit 120. The existence of this insulator allows the battery control unit 130 and the cell control unit 120 to perform the signal transmission/reception using signals whose reference potentials differ from each other.

The battery 100, and the cell unit 110 in particular, are adjusted by the thermodynamic cycle system (which will be described later) so that their temperatures fall into a tolerable temperature range. The cell unit 110 is a heat-liberation components, and accordingly is required to be cooled. Simultaneously, if the peripheral temperature is low, raising the temperature of the battery 100 becomes necessary in some cases so that the predetermined input/output characteristics become obtainable.

The electric energy stored into the battery 100 is used as the driving power for the motor-driving system which is used for running the EV 1000. The storage of the electric energy into the battery 100 is implemented using the regeneration power generated by the regeneration operation of the motor-driving system, the power taken in from the home-oriented commercial power-supply, or the power purchased from a charge station.

When the battery 100 is charged from the home-oriented commercial power-supply 600, or a power-feeding device of the charge station, a power-supply plug 550 of the front end of a power-supply cable, which is electrically connected to an outside power-supply connection terminal of the charger 500, is plugged into an electric outlet 700 on the side of the commercial power-supply 600. Otherwise, a power-supply cable extending from the power-feeding device of the charge station is connected to the outside power-supply connection terminal of the charger 500. This process establishes the electrical connection between the charger 500 and the commercial power-supply 600 or the power-feeding device of the charge station, thereby allowing the AC power to be fed to the charger 500 from the commercial power-supply 600 or the power-feeding device of the charge station. The charger 500 converts the fed AC power into the DC power, and after adjusting the DC power into a charge voltage for the battery 100, feeds the charge voltage to the battery 100. This process charges the battery 100.

Incidentally, the charge from the power-feeding device of the charge station is performed in basically the same manner as in the charge from the home-oriented commercial power-supply 600. The current capacity and charge time of the power to be fed to the charger 500, however, differs between the charge from the home-oriented commercial power-supply 600 and the charge from the power-feeding device of the charge station. Concretely, in the charge from the power-feeding device of the charge station, the current capacity is larger, and the charge time is faster as compared with the charge from the home-oriented commercial power-supply 600. Namely, the high-speed charge is executable.

The charger 500 is the following power conversion device: The charger 500 converts, into the DC power, the AC power fed from the home-oriented commercial power-supply 600 or the power-feeding device of the charge station. Simultaneously, the charger 500 voltage-raises this converted DC power into the charge voltage for the battery 100, then feeding the charge voltage to the battery 100. The charger 500 includes an AC-DC conversion circuit 510, a voltage-raising circuit 520, a driving circuit 530, and a charge control unit 540.

The AC-DC conversion circuit 510 is a power conversion device for converting the AC power fed from an outside power-supply into the DC power, and outputting the DC power. The AC-DC conversion circuit 510, which is constituted with, e.g., the bridge connection of a plurality of diode elements, includes a rectification circuit provided for rectifying the AC power fed from the outside power-supply into the DC power, and a power-factor improvement circuit electrically connected to the DC side of the rectification circuit, and provided for improving the power-factor of the output of the rectification circuit. The circuit which is also employable as the circuit for converting the AC power into the DC power is a circuit which is constituted with the bridge connection of a plurality of switching semiconductor elements to which the diode elements are connected in inversely-parallel thereto.

The voltage-raising circuit 520 is a power conversion device for voltage-raising the DC power, which is outputted from the AC-DC conversion circuit 510 (i.e., power-factor improvement circuit), up to the charge voltage for the battery 100. The voltage-raising circuit 520 is constituted with, e.g., an insulating-type DC-DC converter. The insulating-type DC-DC converter includes a transformer, a conversion circuit electrically connected to the primary-side winding of the transformer, constituted with the bridge connection of a plurality of switching semiconductor elements, and converting the DC power outputted from the AC-DC conversion circuit 510 into the AC power, and inputting the AC power into the primary-side winding of the transformer, a rectification circuit electrically connected to the secondary-side winding of the transformer, constituted with the bridge connection of a plurality of diode elements, and rectifying the AC power, which is generated in the secondary-side winding of the transformer, into the DC power, a smoothing reactor electrically connected to the positive-pole side of the output side (i.e., DC side) of the rectification circuit in series therewith, and a smoothing capacitor electrically connected to between the positive and negative poles of the output side (i.e., DC side) of the rectification circuit in parallel thereto.

The charge control unit 540 is the following electronic circuit device: Having received the signal outputted from the vehicle control unit 80 and the signal outputted from the battery control unit 130 of the battery 100, the charge control unit 540 generates the switching command signal (e.g., PWM (: Pulse Width Modulation) signal) with respect to the plurality of switching semiconductor elements of the voltage-raising circuit 520, then outputting the switching command signal to the driving circuit 530. This process is performed in order to control the charge termination/start of the battery 100 by the charger 500, and factors such as the power, voltage, and current fed from the charger 500 into the battery 100 at the time of charge. The charge control unit 540 is constituted by implementing, on the circuit board, a plurality of electronic components including a computation processing unit such as microcomputer.

The vehicle control unit 80 monitors the input-side voltage of the charger 500, for example. Moreover, if the vehicle control unit 80 judges that the charger 500 falls into a charge start state such that both of the charger 500 and the outside power-supply are electrically connected to each other to apply the voltage to the input side of the charger 500, the device 80 outputs a charge-starting command signal to the charge control unit 540. Meanwhile, if, based on a battery state signal outputted from the control device for the battery 100, the device 80 judges that the battery 100 falls into a full-charge state, the device 80 outputs a charge-terminating command signal to the charge control unit 540. The operations like this may also be performed by the motor control unit 340 or the control device for the battery 100, or may also be performed by the charge control unit 540 itself in cooperation with the control device for the battery 100.

The control device for the battery 100 detects the state of the battery 100, thereby computing the tolerable charge amount for the battery 100 so that the charge from the charger 500 into the battery 100 will be controlled. Moreover, the control device outputs a signal about this computation result to the charger 500.

The driving circuit 530 is the following electronic circuit device: Having received the command signal outputted from the charge control unit 540, the driving circuit 530 generates a driving signal with respect to the plurality of switching semiconductor elements of the voltage-raising circuit 520. Then, the circuit 530 outputs the driving signal to the gate electrodes of the plurality of switching semiconductor elements. The driving circuit 530 is constituted by implementing, on the circuit board, a plurality of electronic components such as the switching semiconductor elements and amplifiers.

Incidentally, in the case where the AC-DC conversion circuit 510 is constituted with the switching semiconductor elements, the switching command signal with respect to the switching semiconductor elements of the AC-DC conversion circuit 510 is outputted from the charge control unit 540 to the driving circuit 530. Subsequently, the driving signal with respect to the switching semiconductor elements of the AC-DC conversion circuit 510 is outputted from the driving circuit 530 to the gate electrodes of the switching semiconductor elements of the AC-DC conversion circuit 510. This process allows implementation of the control over the switching of the switching semiconductor elements of the AC-DC conversion circuit 510.

The junction box 400 contains therein the primary positive-pole side relay 410 and a secondary positive-pole side relay 430, and the primary negative-pole side relay 420 and a secondary negative-pole side relay 440.

The primary positive-pole side relay 410 is a switch for controlling an electrical connection between the DC positive-pole side of the inverter device 300 (power module 310) and the positive-pole side of the battery 100. The primary negative-pole side relay 420 is a switch for controlling an electrical connection between the DC negative-pole side of the inverter device 300 (power module 310) and the negative-pole side of the battery 100. The secondary positive-pole side relay 430 is a switch for controlling an electrical connection between the DC positive-pole side of the charger 500 (voltage-raising circuit 520) and the positive-pole side of the battery 100. The secondary negative-pole side relay 440 is a switch for controlling an electrical connection between the DC negative-pole side of the charger 500 (voltage-raising circuit 520) and the negative-pole side of the battery 100.

The primary positive-pole side relay 410 and the primary negative-pole side relay 420 are closed when the rotational driving power of the motor-generator 200 is in a necessary operation mode, and when the power generation of the motor-generator 200 is in a necessary operation mode. The relays 410 and 420 are opened when the vehicle is in a halt mode (i.e., when the ignition-key switch is turned off), when an abnormality occurs in the motor-driving system or the vehicle, and when the battery 100 is charged by the charger 500. Meanwhile, the secondary positive-pole side relay 430 and the secondary negative-pole side relay 440 are closed when the battery 100 is charged by the charger 500. The relays 430 and 440 are opened when the charge into the battery 100 by the charger 500 is terminated, and when an abnormality occurs in the charger 500 or the battery 100.

The open/close of the primary positive-pole side relay 410 and the primary negative-pole side relay 420 is controlled by an open/close command signal outputted from the vehicle control unit 80. The open/close of the primary positive-pole side relay 410 and the primary negative-pole side relay 420 may also be controlled by an open/close command signal outputted from another control device, e.g., the motor control unit 340 or the control device for the battery 100. The open/close of the secondary positive-pole side relay 430 and the secondary negative-pole side relay 440 is controlled by an open/close command signal outputted from the charge control unit 540. The open/close of the secondary positive-pole side relay 430 and the secondary negative-pole side relay 440 may also be controlled by an open/close command signal outputted from another control device, e.g., the vehicle control unit 80 or the control device for the battery 100.

As having been described above, in the EV 1000, the electrical connections among the battery 100, the inverter device 300, and the charger 500 are controlled by providing the primary positive-pole side relay 410, the primary negative-pole side relay 420, the secondary positive-pole side relay 430, and the secondary negative-pole side relay 440 among the battery 100, the inverter device 300, and the charger 500. This feature makes it possible to ensure implementation of the high safety for the high-voltage motor-driving system.

Incidentally, in the EV 1000 illustrated in Fig. 13, the explanation has been given selecting, as its example, the case where the motor-generator 200 and the inverter device 300 are provided as the separated units. The motor-generator 200 and the inverter device 300, however, may also be provided as a single unit such that, e.g., the inverter device 300 and the motor-generator 200 are integrated into the single unit by fixing the housing of the inverter device 300 on the housing of the motor-generator 200. When the motor-generator 200 and the inverter device 300 are integrated into the single unit, it becomes easier to perform piping work for circulating a cooling medium for cooling the motor-generator 200 and the inverter device 300. This makes it possible to configure the cooling-medium circulation system easily.

Next, the explanation will be given below concerning the thermodynamic cycle system set up on the EV 1000.

The air-conditioning system using a heat-transferring-type refrigeration cycle system, which is referred to as "heat pump", is set up on the EV 1000. In the cooling operation using the refrigeration cycle system, first, a refrigerant, i.e., a working medium, is transformed into a high-temperature and high-pressure gas by using a compressor. Then, this high-temperature and high-pressure gas-state refrigerant is liberated out into the outdoor air by using an outdoor-provided heat exchanger, thereby being condensed and thus being formed into a high-pressure liquid-state refrigerant. Next, this high-pressure liquid-state refrigerant is transformed into a low-temperature and low-pressure two-layer-state (i.e., liquid and gas) refrigerant by using a pressure reducer (i.e., expansion valve). Finally, the indoor heat is absorbed (the refrigerant becomes gaseous) via an indoor-provided heat exchanger. This process cools the indoor air. Meanwhile, in the heating operation using the refrigeration cycle system, the operations of the indoor and outdoor heat exchangers are made inverse to the case of the cooling operation, thereby liberating the heat into the room via the indoor-provided heat exchanger. This process heats the indoor air.

Also, a temperature-adjusting system (cooling system) for cooling the heat-liberation components, such as the battery, the motor-generator, and the inverter device, is set up on the EV 1000. In the temperature-adjusting system for cooling the heat-liberation components, the heat-liberation components are cooled by circulating a cooling liquid (water or antifreeze solution), i.e., a heat-transferring medium, through the heat-liberation components with the use of a pump. After the cooling, the heat of the heat-liberation components collected into the cooling liquid is liberated out into the atmosphere via the heat exchangers.

An energy source becomes necessary in order to work the thermodynamic cycle system which includes the air-conditioning system and the temperature-adjusting system. In particular, in the EV, the thermodynamic cycle system works in such a manner that the electric energy stored in the battery is fed to the thermodynamic cycle system. Namely, the battery, i.e., the driving power-supply for the motor-generator, is used as the energy source for the system. On account of this condition, in the EV, the electric energy stored in the battery is consumed by the thermodynamic cycle system. What is more, its consumption ratio is comparatively higher than the other loads.

On the other hand, the influence exerted on the Earth's environment by the EV is smaller than a hybrid electric vehicle (which, hereinafter, will be described as "HEV") (strictly speaking, the influence is equal to zero). As a result, significant attention has been focused on the EV.

In the EV, however, the possible travel distance on a one-battery-charge basis is short. What is more, building of infrastructure facilities such as the charge stations has delayed. Accordingly, the diffusion rate of the EV is lower than that of the HEV. Also, the EV requires, for traveling a desired cruising distance, an electric energy which is higher than the electric energy stored into the battery of the HEV. Consequently, the battery capacity of the EV becomes larger than that of the HEV. On account of this condition, the battery cost of the EV becomes higher than that of the HEV, and the vehicle price of the EV becomes higher than that of the HEV. As a result, the diffusion rate of the EV is lower than that of the HEV.

Heightening the diffusion rate of the EV makes it necessary to extend the EV's traveling distance on a one-battery-charge basis. Then, extending the EV's traveling distance on a one-battery-charge basis makes it necessary to suppress the consumption of the electric energy stored in the battery other than the consumption thereof for the motor-generator driving.

Each of the heat-liberation components, such as the battery, the motor-generator, and the inverter device, is cooled via a process where a cooling medium collects the heat liberated therefrom. This cooling process adjusts the temperature of each heat-liberation component into a tolerable temperature range. Also, the output of each heat-liberation component changes in an instantaneous manner due to a variation in the load. Then, in accompaniment with this change in the output, the heat-liberation amount of each component changes. In order to operate each heat-liberation component with a high efficiency, it is preferable to always maintain the temperature of each heat-liberation component at an appropriate temperature by changing the cooling capability of each heat-liberation component in correspondence with the change in the heat-liberation amount (i.e., temperature) of each heat-liberation component. In order to change the cooling capability of each heat-liberation component, it is conceivable to make the temperature of the cooling medium variable by changing flow velocity of the cooling medium or wind amount of the air, and changing the heat-exchange amount between the air and the cooling medium.

Meanwhile, heightening the diffusion rate of the EV makes it necessary to accomplish the low-cost implementation of each of the heat-liberation components, such as the battery, the motor-generator, and the inverter device, and thereby to lower the vehicle price of the EV down to a vehicle price which is equivalent to that of the HEV. Then, accomplishing the low-cost implementation of each heat-liberation component makes it necessary to accomplish the small-size and high-output implementation of each heat-liberation component. Actually, however, accomplishing the small-size and high-output implementation of each heat-liberation component gives rise to an increase in the heat-liberation amount (i.e., temperature) of each heat-liberation component. This increase in the heat-liberation amount makes it necessary to increase the cooling capability of each heat-liberation component.

In the heat exchange between the air and the cooling medium, however, the temperature of the cooling medium cannot be lowered down to a temperature which is lower than the temperature of the ambient air. As a result, if, e.g., at the high-temperature time in summer, the heat-liberation amount (i.e., temperature) of each heat-liberation component has increased, it becomes increasingly difficult to permit the temperature of each heat-liberation component to come closer to the appropriate temperature, at which each heat-liberation component can operate with a high efficiency. These circumstances require that the cooling capability of each heat-liberation component can be made variable without being influenced by the peripheral environment's state. Also, at the low-temperature time in winter, these circumstances require that the temperature of each heat-liberation component can be adjusted into the appropriate temperature at which each heat-liberation component can operate with a high efficiency, i.e., each heat-liberation component can be heated.

The problems described above can be solved by making effective use of the thermal energy inside the thermodynamic cycle system of the EV, and implementing the indoor air conditioning and the temperature adjustment of each heat-liberation component.

Accordingly, in embodiments which will be explained hereinafter, there is provided a thermodynamic cycle system of the EV, including a thermodynamic cycle circuit which is separated into a primary-side thermodynamic cycle circuit for performing heat exchange with an outdoor side, and a secondary-side thermodynamic cycle circuit for performing heat exchange with an indoor side and a heat-liberation component side, wherein the primary-side thermodynamic cycle circuit is constituted with a refrigeration cycle system, the secondary-side thermodynamic cycle circuit being constituted with two heat-transferring systems through which heat-transferring media flow independently of each other, intermediate heat exchangers 6a and 6b being provided between the refrigeration cycle system and the respective two heat-transferring systems, so that a refrigerant of the refrigeration cycle system and the heat-transferring media of the respective two heat-transferring systems can perform the heat exchange with each other, an indoor heat exchanger 5a being further provided in the heat-transferring system for performing the heat exchange with the heat-liberation component side, so that the heat-transferring medium of the heat-transferring system for performing the heat exchange with the heat-liberation component side, and air which is taken into the indoor side can perform the heat exchange with each other.

According to the embodiments which will be explained hereinafter, the thermal energy that is obtained by the temperature adjustment of each heat-liberation component is utilized for the indoor air conditioning. This feature makes it possible to accomplish the minimization of the energy needed for the indoor air conditioning, thereby allowing the accomplishment of the energy-saving implementation of the indoor air conditioning. What is more, according to the embodiments which will be explained hereinafter, the thermal energy obtained by the temperature adjustment of each heat-liberation component is directly utilized for the indoor air conditioning. This feature allows the enhancement in the energy-saving effect on the indoor air conditioning. Consequently, according to the embodiments which will be explained hereinafter, it becomes possible to suppress the energy that is taken out by the air-conditioning system from the energy source for each heat-liberation component.

The thermodynamic cycle system described above is preferable when extending the traveling distance of the EV 1000 on a one-battery-charge basis of the battery 100. Also, if the traveling distance of the EV 1000 on a one-battery-charge basis of the battery 100 is basically the same as conventionally, the thermodynamic cycle system described above is preferable when lessening the capacity of the battery 100. Being successful in lessening the capacity of the battery 100 allows accomplishment of the low-cost implementation, prevalence promotion, and light-weight implementation of the EV 1000.

Also, according to the embodiments which will be explained hereinafter, the thermal energy that is used for the indoor air conditioning is utilized for the temperature adjustment of each heat-liberation component. This feature makes it possible to make a wide-range adjustment of the temperature of the heat-transferring media for adjusting the temperature of each heat-liberation component. This wide-range adjustment allows the temperature of each heat-liberation component to be made variable without being influenced by the peripheral environment's state. Consequently, according to the embodiments which will be explained hereinafter, it becomes possible to adjust the temperature of each heat-liberation component into an appropriate temperature at which each heat-liberation component can operate with a high efficiency. This feature permits each heat-liberation component to operate with the high efficiency.

The thermodynamic cycle system described above is preferable in accomplishing the low-cost implementation of the EV 1000. Being successful in accomplishing the low-cost implementation of the EV 1000 allows accomplishment of the prevalence of the EV 1000.

Incidentally, in addition to the above-described problems, configurations, and methods, there exist other problems to be solved and other configurations and methods for solving these problems. These other problems, configurations, and methods, however, will be explained in the following embodiments.

Hereinafter, referring to the drawings, the detailed description will be given below concerning embodiments of the thermodynamic cycle system set up on the EV 1000.

### (1st Embodiment)

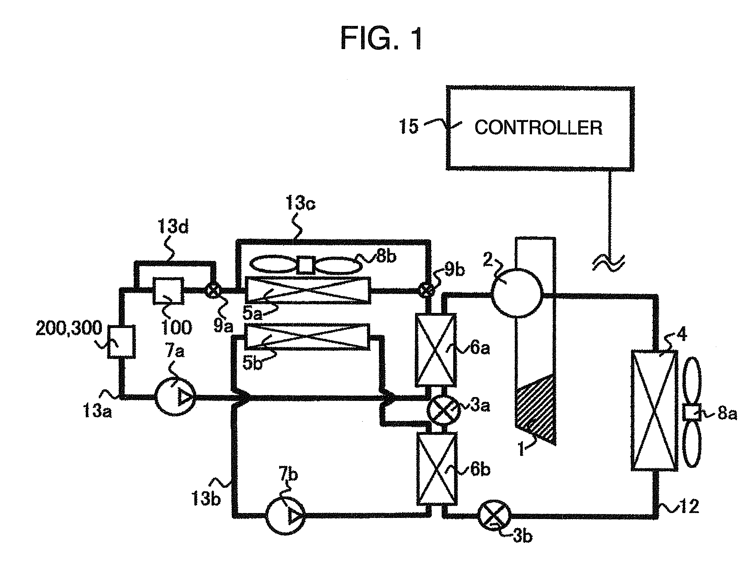

Referring to Fig. 1 through Fig. 8, the explanation will be given below regarding a first embodiment of the thermodynamic cycle system set up on the EV 1000.

Fig. 1 through Fig. 8 illustrate the configuration of the thermodynamic cycle system set up on the EV 1000.

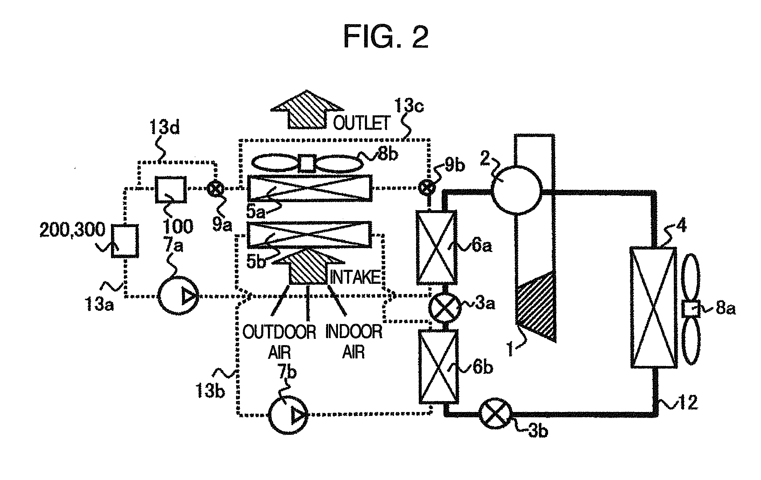

Incidentally, Fig. 2 illustrates, with the solid line, a refrigerant pipe 12 (i.e., primary-side thermodynamic cycle circuit) through which a refrigerant such as HFC-134a flows. Also, Fig. 2 illustrates, with the dotted lines, heat-transferring medium pipes 13a and 13b (i.e., secondary-side thermodynamic cycle circuit) through which liquid-state cooling agents (i.e., heat-transferring media) such as water or antifreeze solution flow.

The thermodynamic cycle system set up on the EV 1000 includes a thermodynamic cycle circuit. As illustrated in Fig. 1 and Fig. 2, this thermodynamic cycle circuit is separated into the primary-side thermodynamic cycle circuit for performing heat exchange with an outdoor side, and the secondary-side thermodynamic cycle circuit for performing heat exchange with an indoor side and a heat-liberation component side. Here, the primary-side thermodynamic cycle circuit is constituted with a refrigeration cycle system, and the secondary-side thermodynamic cycle circuit is constituted with a first heat-transferring system and a second heat-transferring system through which the cooling liquids flow independently of each other.

The refrigeration cycle system and the first heat-transferring system constitute a temperature-adjusting system. This temperature-adjusting system is used for performing the temperature adjustment of the heat-liberation components, such as the battery 100, the motor-generator 200, and the inverter device 300, and the indoor air conditioning. The intermediate heat exchanger 6a for performing the heat exchange between the refrigerant of the refrigeration cycle system and the cooling liquid of the first heat-transferring system is provided between the refrigeration cycle system and the first heat-transferring system. The refrigeration cycle system and the second heat-transferring system constitute an air-conditioning system which is used for the indoor air conditioning. The intermediate heat exchanger 6b for performing the heat exchange between the refrigerant of the refrigeration cycle system and the cooling liquid of the second heat-transferring system is provided between the refrigeration cycle system and the second heat-transferring system.

Incidentally, in some cases, the definition of the heat-liberation components also includes a power conversion device other than the inverter device 300. An example of such a power conversion device is a component of another motor-driving system, e.g., a DC-DC converter.

Also, the motor-generator 200 and the inverter device 300 may be heated and cooled in parallel to each other, or may be heated and cooled in series with each other. In the case of the in-series heating and cooling, it is preferable to deploy the motor-generator 200 and the inverter device 300 with reference to the piping channels so that the motor-generator 200 is cooled after the inverter device 300 has been cooled.

The refrigeration cycle system is one of the heat-transferring-type thermodynamic cycle systems referred to as "heat pump". As illustrated in Fig. 1 and Fig. 2, the refrigeration cycle system is constituted with the primary loop channel along which the refrigerant pipe 12 is installed in a loop-like manner. Here, the refrigerant flows through the refrigerant pipe. Components which are deployed on the primary loop channel constituted with the refrigerant pipe 12 are as follows: A compressor 1, a four-way valve 2, an outdoor heat exchanger 4, a pressure reducer 3b, the intermediate heat exchanger 6b, a pressure reducer 3a, and the intermediate heat exchanger 6a. A fan 8a is mounted onto the outdoor heat exchanger 4. On the primary loop channel, switching the four-way valve 2 allows the configuration of the following two channels: A channel along which the refrigerant circulates in a sequence of the compressor 1, the four-way valve 2, the outdoor heat exchanger 4, the pressure reducer 3b, the intermediate heat exchanger 6b, the pressure reducer 3a, the intermediate heat exchanger 6a, the four-way valve 2, and the compressor 1; and a channel along which the refrigerant circulates in a sequence of the compressor 1, the four-way valve 2, the intermediate heat exchanger 6a, the pressure reducer 3a, the intermediate heat exchanger 6b, the pressure reducer 3b, the outdoor heat exchanger 4, the four-way valve 2, and the compressor 1.

The compressor 1 is an electric-operated fluid appliance for forming the refrigerant into a high-temperature and high-pressure gas-state medium by the compression. The four-way valve 2 is a switcher for switching the flow direction of the refrigerant that is absorbed into the compressor 1 and is ejected therefrom. The four-way valve 2 switches the flow of the refrigerant between the following two directions: A direction in which the refrigerant is absorbed into the compressor 1 from the side of the intermediate heat exchanger 6a, and is ejected onto the side of the outdoor heat exchanger 4; and a direction in which the refrigerant is absorbed into the compressor 1 from the side of the outdoor heat exchanger 4, and is ejected onto the side of the intermediate heat exchanger 6a. The outdoor heat exchanger 4 is a heat-transferring appliance for transferring heat from the high-temperature side medium to the low-temperature side medium between the air sent by the fan 8a and the refrigerant. The pressure reducers 3a and 3b are expansion valves (throttle valves) for adjusting the temperature and pressure of the refrigerant by reducing the pressure of the refrigerant and expanding the refrigerant on the basis of the open-degree adjustment of the valve units. The intermediate heat exchanger 6a is a heat-transferring appliance for transferring heat from the high-temperature side medium to the low-temperature side medium between the cooling liquid circulating through the first heat-transferring system and the refrigerant. The intermediate heat exchanger 6a plays a role of an evaporator. The intermediate heat exchanger 6b is a heat-transferring appliance for transferring heat from the high-temperature side medium to the low-temperature side medium between the cooling liquid circulating through the second heat-transferring system and the refrigerant. The intermediate heat exchanger 6b plays a role of an evaporator.

The first heat-transferring system is a thermodynamic cycle system for making the temperature adjustment (i.e., cooling and heating) of the heat-liberation components, such as the battery 100, the motor-generator 200, and the inverter device 300, by circulating the liquid-state heat-transferring medium such as water or antifreeze solution. As illustrated in Fig. 1 and Fig. 2, the first heat-transferring system is constituted with the secondary loop channel along which the heat-transferring medium pipe 13a is installed in a loop-like manner. Here, the cooling liquid flows through the heat-transferring medium pipe 13a. Components which are deployed on the secondary loop channel constituted with the heat-transferring medium pipe 13a are as follows: The indoor heat exchanger 5a, the above-described heat-liberation components (such as the battery 100, the motor-generator 200, and the inverter device 300), a pump 7a, the intermediate heat exchanger 6a, and three-way valves 9a and 9b. Also, components which are further deployed on the secondary loop channel constituted with the heat-transferring medium pipe 13a are as follows: A bypass pipe 13c for permitting the cooling liquid to flow through the pipe 13a in a manner of bypassing the indoor heat exchanger 5a, and a bypass pipe 13d for permitting the cooling liquid to flow through the pipe 13a in a manner of bypassing the battery 100.

The second heat-transferring system is a thermodynamic cycle system for adjusting the state (such as the temperature and humidity) of the air inside the room by circulating the liquid-state heat-transferring medium such as water or antifreeze solution. As illustrated in Fig. 1 and Fig. 2, the second heat-transferring system is constituted with the secondary loop channel along which the heat-transferring medium pipe 13b is installed in a loop-like manner. Here, the cooling liquid flows through the heat-transferring medium pipe 13b. An indoor heat exchanger 5b, a pump 7b, and the intermediate heat exchanger 6b are deployed on the secondary loop channel constituted with the heat-transferring medium pipe 13b.

The indoor heat exchanger 5a is a heat-transferring appliance for transferring the heat from the high-temperature side medium to the low-temperature side medium between the cooling liquid circulating through the heat-transferring medium pipe 13a and the air inside the room (i.e., indoor air) or the air taken from the outside (i.e., outdoor air). The indoor heat exchanger 5b is a heat-transferring appliance for transferring the heat from the high-temperature side medium to the low-temperature side medium between the cooling liquid circulating through the heat-transferring medium pipe 13b and the air inside the room (i.e., indoor air) or the air taken from the outside (i.e., outdoor air).

The pump 7a is a fluid appliance for circulating the cooling liquid inside the heat-transferring medium pipe 13a. The pump 7b is a fluid appliance for circulating the cooling liquid inside the heat-transferring medium pipe 13b.

The three-way valve 9a is a switcher for switching the flow-through channel of the cooling liquid on the basis of the switching of the valve unit. The valve 9a switches the channel between a channel for causing the cooling liquid to flow therethrough via the battery 100, and a channel for causing the cooling liquid to flow therethrough via the bypass pipe 13d. The three-way valve 9b is a switcher for switching the flow-through channel of the cooling liquid on the basis of the switching of the valve unit. The valve 9b switches the channel between a channel for causing the cooling liquid to flow therethrough via the indoor heat exchanger 5a, and a channel for causing the cooling liquid to flow therethrough via the bypass pipe 13c.

A fan 8b is provided on the exit side of the indoor heat exchanger 5a and the indoor heat exchanger 5b. Activating the fan 8b causes the indoor air or the outdoor air to be absorbed thereby. As illustrated in Fig. 2, this process causes the indoor air or the outdoor air to flow in from a direction of the arrow "intake", and to pass through the indoor heat exchanger 5a and the indoor heat exchanger 5b in a sequence of the indoor heat exchanger 5b and the indoor heat exchanger 5a, and then to flow out into a direction of the arrow "outlet". At this time, the indoor air or the outdoor air is heat-exchanged with the cooling liquid, thereby being adjusted into a predetermined temperature (including dehumidification). After that, the indoor air or the outdoor air is sent into the room by the fan 8b.

As illustrated in Fig. 1, a controller 15 is provided in the thermodynamic cycle system. The controller 15 sets values such as the temperature and pressure of the refrigerant and the flow amount or flow velocity of each cooling liquid. This setting is performed based on plural pieces of inputted information including temperature measurement information on each heat-liberation component obtained from a temperature sensor (whose illustration is omitted) included in each heat-liberation component, temperature measurement information on each cooling liquid obtained from a temperature sensor (whose illustration is omitted) included in each of the first and second heat-transferring systems, indoor request temperature which is manually set by the driver or automatically set, and in-advance-set cooling threshold value and heating threshold value for each heat-liberation component. Simultaneously, based on these set values, the controller 15 sets an instruction value for controlling the activation of each component of the thermodynamic cycle system. Moreover, the controller 15 outputs, to each component, a signal corresponding to this instruction value, thereby controlling the activation of each component. This process controls the states of the refrigerant and each cooling liquid, thereby controlling the temperature of each heat-liberation component and the indoor temperature.

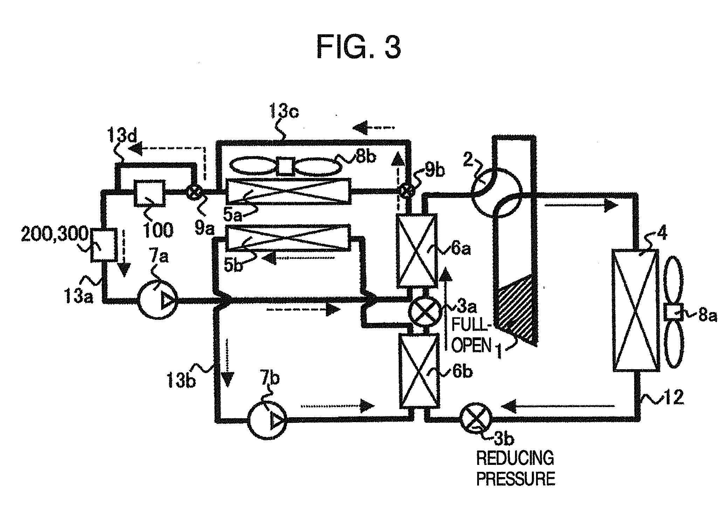

Next, referring to Fig. 3 through Fig. 8, the explanation will be given below concerning the operation of the thermodynamic cycle system in the present embodiment.

First, referring to Fig. 3, the explanation will be given below regarding the operation of the thermodynamic cycle system at the time of its cooling operation.

As illustrated in Fig. 3, during the cooling operation, the four-way valve 2 causes the refrigerant flowing through the refrigerant pipe 12 to flow therethrough in the direction in which the refrigerant is absorbed into the compressor 1 from the side of the intermediate heat exchanger 6a, and is ejected onto the side of the outdoor heat exchanger 4. In the cooling operation, first, the refrigerant is compressed in the compressor 1, thereby being formed into a high-temperature and high-pressure gas-state medium. After that, the refrigerant is heat-exchanged (i.e., its heat is liberated out into the air) in the outdoor heat exchanger 4, thereby being condensed and thus being formed into a high-pressure liquid-state medium. After that, the refrigerant is pressure-reduced in the pressure reducer 3b, thereby being formed into a low-temperature and low-pressure refrigerant (i.e., two-layer refrigerant of liquid state and gas state). After that, the refrigerant is heat-exchanged in the intermediate heat exchanger 6b with the cooling liquid flowing through the heat-transferring medium pipe 13b. After that, the refrigerant passes through the pressure reducer 3a in its full-open state, then being heat-exchanged in the intermediate heat exchanger 6a with the cooling liquid flowing through the heat-transferring medium pipe 13a. After that, the refrigerant flows through the compressor 1 again via the four-way valve 2, thereby being compressed again. Then, the refrigerant repeats the series of cycles described above.

The cooling liquid flowing through the heat-transferring medium pipe 13b is pressured and sent by the pump 7b, thereby circulating through the heat-transferring medium pipe 13b. The cooling liquid pressured and sent by the pump 7b is, first, heat-exchanged with the refrigerant in the intermediate heat exchanger 6b, thereby being cooled. After that, the cooling liquid is heat-exchanged in the indoor heat exchanger 5b with the indoor air or the outdoor air sent into the room. This process causes the heat of the indoor air or the outdoor air to be absorbed by the cooling liquid, thereby cooling the indoor air or the outdoor air. Then, the indoor air or outdoor air cooled is sent into the room by the fan 8b, thereby cooling the indoor side. After that, the cooling liquid flows through the intermediate heat exchanger 6b again. Then, the cooling liquid repeats the series of cycles described above.

The cooling liquid flowing through the heat-transferring medium pipe 13a is pressured and sent by the pump 7a, thereby circulating through the heat-transferring medium pipe 13a. The cooling liquid pressured and sent by the pump 7a is, first, heat-exchanged with the refrigerant in the intermediate heat exchanger 6a, thereby being cooled. After that, the three-way valve 9b controls the flow-through direction of the cooling liquid. Namely, the cooling liquid is caused to flow through the bypass pipe 13c, i.e., the cooling liquid flows therethrough in a manner of bypassing the indoor heat exchanger 5a. After that, the cooling liquid flows through the side of the battery 100. Here, if the temperature of the battery 100 falls in a tolerable temperature range, the three-way valve 9a controls the flow-through direction of the cooling liquid. Namely, the cooling liquid is caused to flow through the bypass pipe 13d, i.e., the cooling liquid flows therethrough in a manner of bypassing the battery 100. Moreover, if the temperature of the battery 100 is higher than an upper-limit value of the tolerable temperature range, the three-way valve 9a controls the flow-through direction of the cooling liquid. Namely, the cooling liquid is caused to flow through the battery 100, thereby cooling the battery 100. After that, the cooling liquid flows through the motor-generator 200 and the inverter device 300, thereby cooling the motor-generator 200 and the inverter device 300. After that, the cooling liquid flows through the intermediate heat exchanger 6a again. Then, the cooling liquid repeats the series of cycles described above.

As described above, the refrigerant has been heat-exchanged with the cooling liquid in the intermediate heat exchangers 6a and 6b. Then, finally, the refrigerant causes the heat received from the cooling liquid to be liberated out into the atmosphere by the heat exchange with the outdoor air in the outdoor heat exchanger 4.

In the present embodiment, the activation of the refrigeration cycle system and the second heat-transferring system allows implementation of the indoor cooling. Also, in the present embodiment, the activation of the refrigeration cycle system and the first heat-transferring system cools each heat-liberation component, thereby making it possible to adjust the temperature of each heat-liberation component into an appropriate temperature at which each heat-liberation component can operate with a high efficiency. At this time, in the present embodiment, the cooling liquid of the first heat-transferring system is cooled using the thermal energy of the refrigerant of the refrigeration cycle system. This feature allows the temperature of the cooling liquid of the first heat-transferring system to be adjusted into a temperature in response to the heat-liberation amount (i.e., temperature) of each heat-liberation component without being influenced by the outdoor environment (i.e., temperature of the air).
Accordingly, in the present embodiment, even if the heat-liberation amount (i.e., temperature) of each heat-liberation component has increased in accompaniment with the small-size and high-output implementation of each heat-liberation component, the temperature of the cooling liquid of the first heat-transferring system can be adjusted in response to this increase in the heat-liberation amount. This feature allows the temperature of each heat-liberation component to be adjusted into the appropriate temperature at which each heat-liberation component can operate with a high efficiency, thereby making it possible to activate each heat-liberation component with a high efficiency,

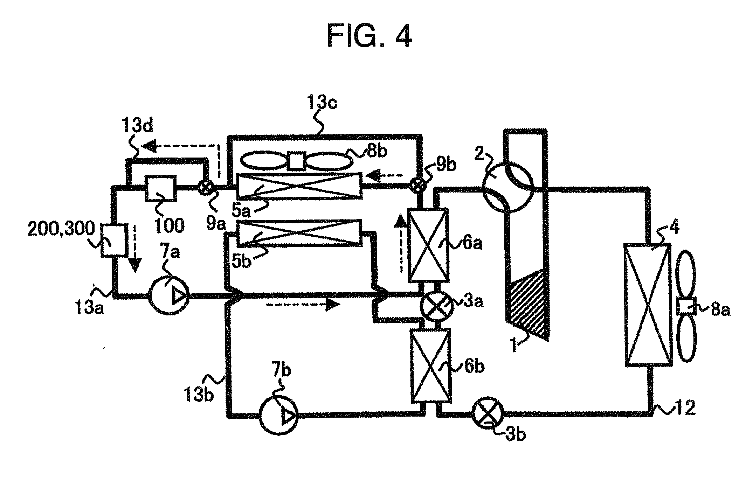

Next, referring to Fig. 4, the explanation will be given below concerning the operation of the thermodynamic cycle system at the time of its heating operation and at the time of the steady state of the EV 1000.

Here, the steady state refers to a state where the activation of the motor-driving system (i.e., the battery 100, the motor-generator 200, and the inverter device 300) causes the EV 1000 to operate, and where the cooling of the battery 100, the motor-generator 200, and the inverter device 300 is necessary.

In the state illustrated in Fig. 4, only the first heat-transferring system is activated. Simultaneously, the motor-generator 200 and the inverter device 300, and the battery 100 if necessary, are cooled using the cooling liquid flowing through the heat-transferring medium pipe 13a. In this case, the cooling liquid, after being pressured and sent by the pump 7a, flows through the intermediate heat exchanger 6a. The cooling liquid, however, passes through the intermediate heat exchanger 6a without being heat-exchanged with the refrigerant. This is because the refrigeration cycle system does not operate. After that, the three-way valve 9b controls the flow-through direction of the cooling liquid. Namely, the cooling liquid is caused to flow through the indoor heat exchanger 5a. In the indoor heat exchanger 5a, the indoor air or outdoor air sent into the room and the cooling liquid are heat-exchanged with each other. The indoor air or outdoor air is heated by this heat exchange, then being sent into the room by the fan 8b. This process heats the indoor side. The heat-exchange amount in the indoor heat exchanger 5a can be adjusted by changing the flow velocity of the pump 7a. After that, the cooling liquid flows through the side of the battery 100. Here, if the temperature of the battery 100 falls in a tolerable temperature range, the three-way valve 9a controls the flow-through direction of the cooling liquid. Namely, the cooling liquid is caused to flow through the bypass pipe 13d, i.e., the cooling liquid flows therethrough in a manner of bypassing the battery 100. Moreover, if the temperature of the battery 100 is higher than the upper-limit value of the tolerable temperature range, the three-way valve 9a controls the flow-through direction of the cooling liquid. Namely, the cooling liquid is caused to flow through the battery 100, thereby cooling the battery 100. After that, the cooling liquid flows through the motor-generator 200 and the inverter device 300, thereby cooling the motor-generator 200 and the inverter device 300. After that, the cooling liquid passes through the intermediate heat exchanger 6a again in the manner of being not heat-exchanged with the refrigerant. Then, the cooling liquid repeats the series of cycles described above.

In the present embodiment, the heat-liberation components are cooled by the activation of the first heat-transferring system. This feature makes it possible to adjust the temperature of each heat-liberation component into an appropriate temperature at which each heat-liberation component can operate with a high efficiency. What is more, in the present embodiment, the indoor side can be heated using the heat that is collected from the heat-liberation components. At this time, the refrigeration cycle system and the second heat-transferring system are in their halt states. This condition allows the indoor side to be heated without activating the refrigeration cycle system and the second heat-transferring system by taking advantage of the heat collected from the heat-liberation components. This feature makes it possible to accomplish the minimization of the energy needed for the indoor air conditioning, thereby allowing the accomplishment of the energy-saving implementation of the indoor air conditioning. What is more, in the present embodiment, the heat collected from the heat-liberation components can be liberated directly into the air that is taken into the indoor side. This feature makes it possible to minimize a loss due to the thermal-energy conversion, thereby allowing the enhancement in the energy-saving effect. Consequently, in the present embodiment, it becomes possible to suppress the electric energy that is taken out from the battery 100 by the indoor air conditioning.

Incidentally, the inventors at al. of the present invention has made a driving experiment (at maximum speed: 80 km/hour) of the EV 1000, on which the thermodynamic cycle system of the present embodiment is set up, along a test course which simulates an ordinary road. In this way, the inventor at al. has made a confirmation as to whether or not the exhaust heat from the motor-generator 200 and the inverter device 300 makes it possible to heat the indoor side of the EV 1000. As a result, the heat-liberation amount of the motor-generator 200 and the inverter device 300 has become equal to 300 to 500 watt. This means an acquisition of the confirmation that the exhaust heat from the motor-generator 200 and the inverter device 300 makes it possible to heat the indoor side of the EV 1000.

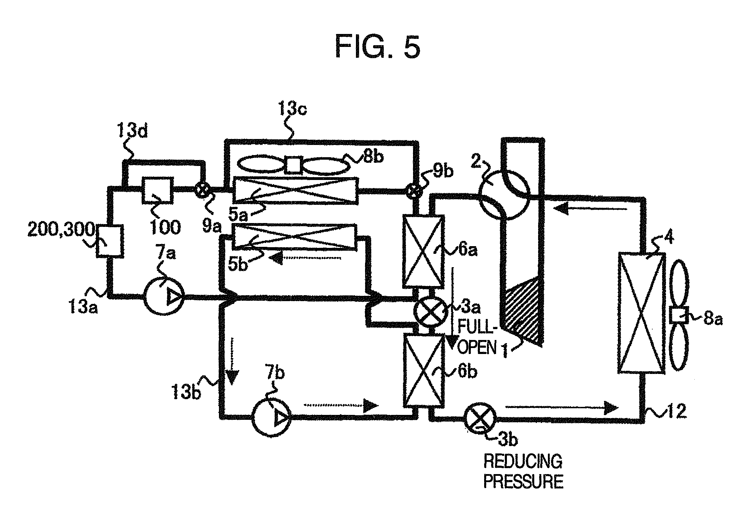

Next, referring to Fig. 5, the explanation will be given below regarding the operation of the thermodynamic cycle system at the time of its heating operation and at the time of the cold-start of the EV 1000.

Here, the time of the cold-start of the EV 1000 refers to the so-called cold-start time, at which the EV 1000 is driven by starting the battery 100, the motor-generator 200, and the inverter device 300 under a condition of being maintained in their refrigeration-device states.

In general, the occasion when the heating is used is a one when the outdoor temperature is low, such as winter season. In this way, when the EV 1000 is in a state of making the cold-start under an environment where the outdoor temperature is low, the cooling liquid flowing through the heat-transferring medium pipe 13a is in its cooled state.

Accordingly, the heat of the cooling liquid flowing through the heat-transferring medium pipe 13a cannot be immediately used for heating the indoor side. Then, in the present embodiment, the refrigerant of the refrigeration cycle system is caused to flow through in a direction opposite to the direction at the time of the cooling operation. In this way, the heat, which is liberated into the atmosphere by the outdoor heat exchanger 4 at the time of the cooling operation, is liberated into the indoor side at the time of the cold-start of the EV 1000, thereby heating the indoor side. At this time, the temperatures of the heat-liberation components, such as the battery 100, the motor-generator 200, and the inverter device 300, are low, and the temperature of the cooling liquid flowing through the heat-transferring medium pipe 13a is also low. On account of this situation, the circulation of the cooling liquid flowing through the heat-transferring medium pipe 13a is not performed.

As illustrated in Fig. 5, the four-way valve 2 causes the refrigerant flowing through the refrigerant pipe 12 to flow therethrough in the direction in which the refrigerant is absorbed into the compressor 1 from the side of the outdoor heat exchanger 4, and is ejected onto the side of the intermediate heat exchanger 6a. The refrigerant, first, is compressed in the compressor 1, thereby being formed into a high-temperature and high-pressure gas-state medium. After that, the refrigerant flows through the intermediate heat exchanger 6a. The refrigerant, however, passes through the intermediate heat exchanger 6a without being heat-exchanged. This is because the first heat-transferring system does not operate. Then, the refrigerant passes through the pressure reducer 3a in its full-open state as well. After that, the refrigerant passes through the intermediate heat exchanger 6b, thereby being heat-exchanged with the cooling liquid flowing through the heat-transferring medium pipe 13b. After that, the refrigerant is pressure-reduced in the pressure reducer 3b. After that, the refrigerant is heat-exchanged in the outdoor heat exchanger 4, thereby absorbing the heat in the air. After that, the refrigerant flows through the compressor 1 again via the four-way valve 2, thereby being compressed again. Then, the refrigerant repeats the series of cycles described above.

After the operation illustrated in Fig. 2 has continued for a while, if the temperatures of the heat-liberation components, such as the battery 100, the motor-generator 200, and the inverter device 300, are caused to rise by the activation of the heat-liberation components, the operation is switched into the heating operation illustrated in Fig. 4.

Also, in an area where the outdoor temperature becomes lower than 0 °C in winter season, the temperatures of the heat-liberation components, such as the battery 100, the motor-generator 200, and the inverter device 300, become extremely low in some cases. In a case like this, the heat-liberation components such as the battery 100, the motor-generator 200, and the inverter device 300, and the battery 100 in particular, are heated before the start of the EV 1000. This heating makes it possible to adjust the temperature of each heat-liberation component into an appropriate temperature at which each heat-liberation component can operate with a high efficiency. In this case, a start-initiating time is set into a start-time setting system in advance. Then, before a predetermined time with reference to the start-initiating time set, the refrigeration cycle system and the first heat-transferring system are activated in basically the same way as the time of the heating operation illustrated in Fig. 5. In this way, in the intermediate heat exchanger 6a, the refrigerant flowing through the refrigerant pipe 12 and the cooling liquid flowing through the heat-transferring medium pipe 13a are heat-exchanged with each other. This process warms the cooling liquid flowing through the heat-transferring medium pipe 13a. After that, the cooling liquid warmed flows through the three-way valve 9b, the bypass pipe 13c, the three-way valve 9a, the battery 100, the motor-generator 200, and the inverter device 300 in this sequence. This process warms the heat-liberation components, such as the battery 100, the motor-generator 200, and the inverter device 300, and the battery 100 in particular (whose input/output characteristics are deteriorated by the low temperature). As a result of this warming, the temperature of each heat-liberation component becomes equal to the appropriate temperature at which each heat-liberation component can operate with a high efficiency.

In the present embodiment, the activation of the refrigeration cycle system and the second heat-transferring system allows implementation of the indoor heating. Also, in the present embodiment, as soon as the temperatures of the heat-liberation components rise, the operation can be switched into the heating operation based on the activation of the first heat-transferring system. This feature allows the activation of the refrigeration cycle system and the second heat-transferring system to be suppressed down to its minimum without lowering the heating capability, thereby making it possible to accomplish the minimization of the energy needed for the indoor air conditioning. Accordingly, in the present embodiment, it becomes possible to accomplish the energy-saving implementation of the indoor air conditioning, thus making it possible to suppress the electric energy that is taken out from the battery 100 by the indoor air conditioning.

Also, in the present embodiment, when the temperatures of the heat-liberation components are extremely low, the activation of the refrigeration cycle system and the first heat-transferring system allows implementation of the heating of the heat-liberation components. Consequently, in the present embodiment, even when the outdoor temperature is extremely low, it becomes possible to adjust the temperature of each heat-liberation component into the appropriate temperature at which each heat-liberation component can operate with a high efficiency. This feature makes it possible to activate each heat-liberation component with a high efficiency from the very start of the EV 1000.

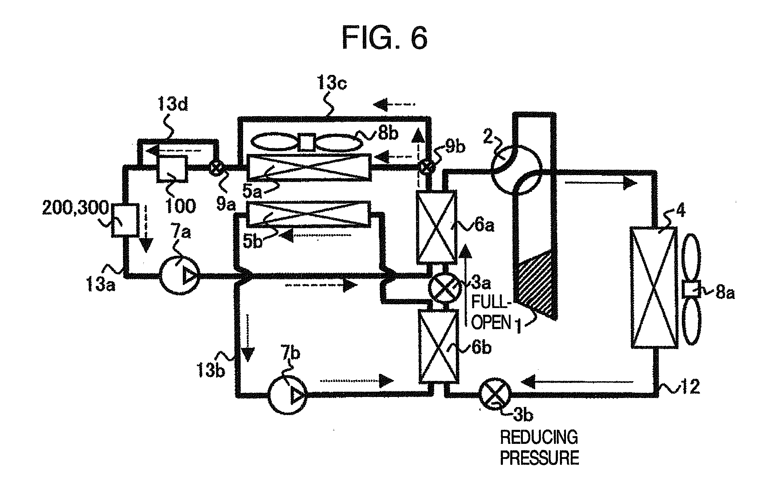

Next, referring to Fig. 6, the explanation will be given below concerning the operation of the thermodynamic cycle system at the time of its cooling-dehumidifying operation.

The operation of the thermodynamic cycle system at the time of its cooling-dehumidifying operation is basically the same as the operation at the time of its cooling operation illustrated in Fig. 3. Namely, in the intermediate heat exchanger 6b, the refrigerant flowing through the refrigerant pipe 12 and the cooling liquid flowing through the heat-transferring medium pipe 13b are heat-exchanged with each other. This heat-exchange process cools the cooling liquid flowing through the heat-transferring medium pipe 13b. After that, in the indoor heat exchanger 5b, the cooling liquid flowing through the heat-transferring medium pipe 13b is heat-exchanged with the air that is taken into the indoor side. The temperature of the cooling liquid is adjusted in such a manner that the temperature of the refrigerant flowing through the refrigerant pipe 12 is adjusted by the open-degree adjustment of the pressure reducer 3b.

Here, the cooling-dehumidifying operation can be implemented by executing the so-called fron-type (otherwise, cooling-type or compressor-type) dehumidification. Here, in this dehumidification, the temperature of the air taken into the indoor side is cooled down to a temperature at which condensation of water vapor contained in the intake air. For implementing this dehumidification, at the time of the cooling-dehumidifying operation, the temperature of the refrigerant flowing through the refrigerant pipe 12 is adjusted by the pressure reducer 3b. This adjustment is made so that the temperature of the cooling liquid flowing through the intermediate heat exchanger 6b becomes equal to the above-described temperature, which permits the moisture (i.e., humidity) contained in the air taken into the indoor side to be condensed into the liquid water. Then, in the indoor heat exchanger 5b, the cooling liquid, whose temperature is adjusted in this way, is heat-exchanged with the air taken into the indoor side. This heat-exchange process causes the moisture (i.e., humidity) contained in the air taken into the indoor side to be eliminated by the condensation of the water vapor, thereby allowing the dried air to be taken into the indoor side.

When executing the cooling-dehumidifying operation, if the temperature of the air taken into the indoor side is low, the air taken into the indoor side and the cooling liquid flowing through the heat-transferring medium pipe 13a are heat-exchanged with each other in the indoor heat exchanger 5a. This heat-exchange process heats the air taken into the indoor side, i.e., reheats the air taken into the indoor side. Also, there is none of the necessity for reheating the air taken into the indoor side, the cooling liquid flowing through the heat-transferring medium pipe 13a is caused to flow through the bypass pipe 13c by the three-way valve 9b. By doing this, the heat of the cooling liquid flowing through the heat-transferring medium pipe 13a transfers to the refrigerant flowing through the refrigerant pipe 12, then being liberated out into the outdoor air via the outdoor heat exchanger 4.

In the present embodiment, the opening of the pressure reducer 3b is adjusted to cause the temperature of the refrigerant flowing through the refrigerant pipe 12 to be into the temperature at which the moisture (i.e., humidity) contained in the air to be condensed into the liquid water. This adjustment process causes the moisture (i.e., humidity) contained in the air taken into the indoor side to be condensed into the liquid water, thereby making it possible to cool-dehumidify the indoor side. At this time, the air taken into the indoor side and the cooling liquid flowing through the heat-transferring medium pipe 13a are heat-exchanged with each other via the indoor heat exchanger 5a, thereby making it possible to heat, i.e., repeat the air taken into the indoor side. This repeating process makes it possible to prevent the indoor side from being cooled too much by the dehumidification.

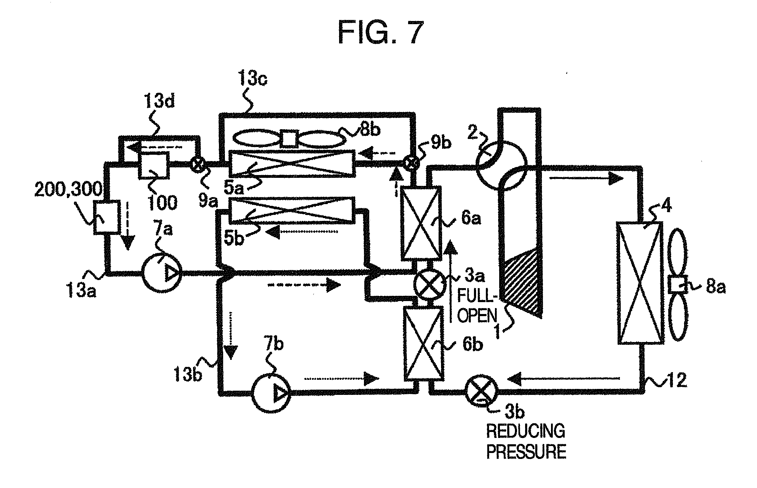

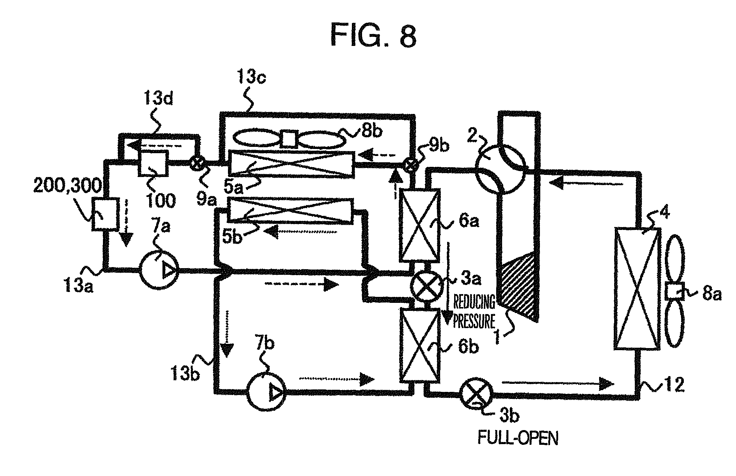

Next, referring to Fig. 7 and Fig. 8, the explanation will be given below regarding the operation of the thermodynamic cycle system at the time of its heating-dehumidifying operation.

In the heating-dehumidifying operation illustrated in Fig. 7, the refrigerant flowing through the refrigerant pipe 12 is circulated in the same direction as the one in the cooling-dehumidifying operation illustrated in Fig. 6. Namely, a high-temperature and high-pressure state refrigerant compressed by the compressor 1 is heat-exchanged in the outdoor heat exchanger 4. After that, the refrigerant is pressure-reduced in the pressure reducer 3b, thereby being transformed into a low-temperature and low-pressure refrigerant. Moreover, in the intermediate heat exchanger 6b, the refrigerant is heat-exchanged with the cooling liquid flowing through the heat-transferring medium pipe 13b. After that, the refrigerant flows through the full-open pressure reducer 3a. Furthermore, in the intermediate heat exchanger 6a, the refrigerant passes therethrough in a manner of being hardly heat-exchanged with the cooling liquid flowing through the heat-transferring medium pipe 13a. In addition, the refrigerant flows through the compressor 1 again via the four-way valve 2, thereby being compressed again. Then, the refrigerant repeats the series of cycles described above.

In the intermediate heat exchanger 6b, the cooling liquid flowing through the heat-transferring medium pipe 13b is heat-exchanged with the refrigerant flowing through the refrigerant pipe 12, thereby being cooled. After that, in the indoor heat exchanger 5b, the cooling liquid is heat-exchanged with the air that is taken into the indoor side. This heat-exchange process cools the air taken into the indoor side. The temperature of the cooling liquid is adjusted in such a manner that the temperature of the refrigerant flowing through the refrigerant pipe 12 is adjusted by the adjustment of the compression operation performed by the compressor 1.

In the intermediate heat exchanger 6a, the cooling liquid flowing through the heat-transferring medium pipe 13a passes therethrough in a manner of being hardly heat-exchanged. After that, the cooling liquid is caused to flow through the indoor heat exchanger 5a by the three-way valve 9b. In the indoor heat exchanger 5a, the cooling liquid is heat-exchanged with the air that is taken into the indoor side. This heat-exchange process heats the air taken into the indoor side. After that, the cooling liquid flows through the battery 100, the motor-generator 200, and the inverter device 300 in this sequence. Incidentally, the refrigerant flowing through the refrigerant pipe 12 is heat-exchanged in the intermediate heat exchanger 6b, which heightens the temperature of the refrigerant. As a result, eventually, the refrigerant is hardly heat-exchanged in the intermediate heat exchanger 6a.

Here, as is the case with the cooling-dehumidifying operation, the heating-dehumidifying operation can also be implemented by executing the fron-type dehumidification. Here, in this dehumidification, the temperature of the air taken into the indoor side is cooled down to a temperature at which the moisture (i.e., humidity) contained in the air is condensed into liquid water. For implementing this dehumidification, at the time of the heating-dehumidifying operation, the temperature of the refrigerant flowing through the refrigerant pipe 12 is adjusted by the pressure reducer 3b. This adjustment is made so that the temperature of the cooling liquid flowing through the intermediate heat exchanger 6b becomes equal to the above-described temperature, which permits the moisture (i.e., humidity) contained in the air taken into the indoor side to be condensed into the liquid water. Then, in the indoor heat exchanger 5b, the cooling liquid, whose temperature is adjusted in this way, is heat-exchanged with the air taken into the indoor side. This heat-exchange process causes the moisture (i.e., humidity) contained in the air taken into the indoor side to be eliminated by the condensation of the moisture into the liquid water, thereby allowing the dried air to be taken into the indoor side.

In the heating-dehumidifying operation, the temperature of the air taken into the indoor side is low. Accordingly, in the indoor heat exchanger 5a, the air taken into the indoor side and the cooling liquid flowing through the heat-transferring medium pipe 13a are heat-exchanged with each other, thereby heating the air taken into the indoor side. The execution of this process allows the appropriate-temperature-warmed and dried air to be taken into the indoor side. This can improve the amenity in the indoor.

Also, in the present embodiment, the adjustment of the open degree of the pressure reducer 3a, which is provided between the intermediate heat exchangers 6a and 6b, allows implementation of a lowering in the temperature of the cooling liquid which flows into the intermediate heat exchanger 6a. This condition makes it possible to cool the cooling liquid flowing through the heat-transferring medium pipe 13a. Accordingly, it becomes possible to execute the cooling of the heat-liberation components, such as the battery 100, the motor-generator 200, and the inverter device 300, even at the time of the heating-dehumidifying operation.

Furthermore, in the heating-dehumidifying operation illustrated in Fig. 8, the heating-dehumidifying operation can also be implemented by circulating the refrigerant flowing through the refrigerant pipe 12 in the same direction as the one in the heating operation illustrated in Fig. 5. Namely, a high-temperature and high-pressure state refrigerant compressed by the compressor 1 is caused to flow through onto the side of the intermediate heat exchanger 6a. In the intermediate heat exchanger 6a, the refrigerant is almost heat-exchanged with the cooling liquid flowing through the heat-transferring medium pipe 13a. This heat-exchange process heats the cooling liquid flowing through the heat-transferring medium pipe 13a. After that, the refrigerant is pressure-reduced in the pressure reducer 3a, thereby being formed into a low-temperature and low-pressure refrigerant. After that, in the intermediate heat exchanger 6b, the refrigerant is heat-exchanged with the cooling liquid flowing through the heat-transferring medium pipe 13b. After that, the refrigerant flows through the full-open pressure reducer 3b. Moreover, the refrigerant is heat-exchanged in the outdoor heat exchanger 4, then being compressed again. In addition, the refrigerant repeats the series of cycles described above.

Taking the temperature of each heat-liberation component and the indoor temperature into consideration, the condition which is employable as the heating-dehumidifying operation condition is either of the conditions given in Fig. 7 and Fig. 8, where the power consumption amount becomes smaller.

### (2nd Embodiment)

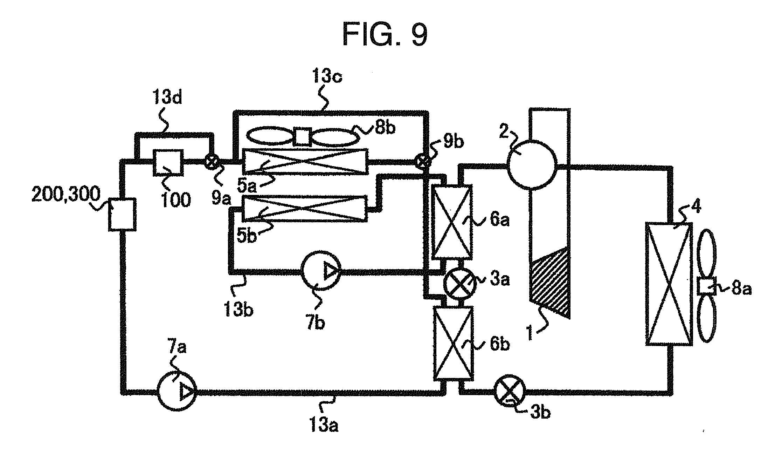

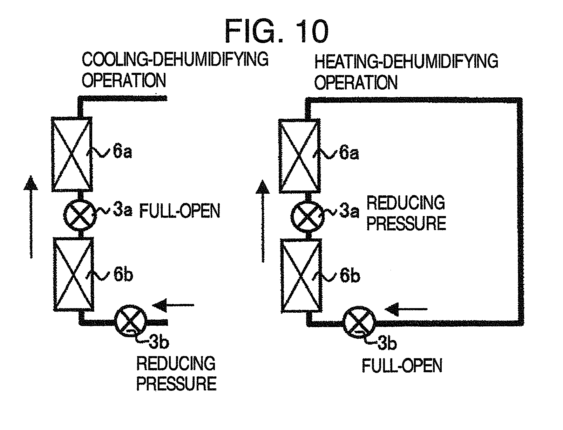

Referring to Fig. 9 and Fig. 10, the explanation will be given below concerning a second embodiment of the thermodynamic cycle system set up on the EV 1000.

The present embodiment is a modified embodiment of the first embodiment. Concretely, the correspondence relationship between the intermediate heat exchangers 6a and 6b and the first and second heat-transferring systems is a relationship which is inversed to the one in the first embodiment. Namely, the cooling liquid in the first heat-transferring system and the refrigerant in the refrigeration cycle system are heat-exchanged with each other by the intermediate heat exchanger 6b which is deployed between the pressure reducers 3a and 3b. Also, the cooling liquid in the second heat-transferring system and the refrigerant in the refrigeration cycle system are heat-exchanged with each other by the intermediate heat exchanger 6a which is deployed between the pressure reducer 3a and the four-way valve 2.

The other configurations are basically the same as those in the first embodiment. Accordingly, the same reference numerals are affixed to the same configurations as those in the first embodiment, and thus the explanation thereof will be omitted.

Also, each operation in the present embodiment at the time of its cooling or heating operation is the same as the one in the first embodiment. In each operation in the present embodiment at the time of its cooling-dehumidifying or heating-dehumidifying operation, however, the refrigeration cycle system performs its cooling operation always. As illustrated in Fig. 10, in the cooling-dehumidifying operation, the refrigerant flowing through the refrigerant pipe 12 is caused to flow therethrough from the side of the pressure reducer 3b to the side of the pressure reducer 3a under a condition that the pressure reducer 3a is set into its full-open state, and that the pressure reducer 3b is set into a state where its open degree is throttled. Meanwhile, in the heating-dehumidifying operation, the refrigerant flowing through the refrigerant pipe 12 is caused to flow therethrough from the side of the pressure reducer 3b to the side of the pressure reducer 3a under a condition that the pressure reducer 3a is set into a state where its open degree is throttled, and that the pressure reducer 3b is set into its full-open state. In this way, the adjustment is made with respect to the temperatures of the cooling liquids flowing through the heat-transferring medium pipes 13a and 13b.

According to the present embodiment explained so far, as is the case with the first embodiment, it becomes possible to perform not only the air conditioning of the vehicle, but also the temperature adjustment of each heat-liberation component. Consequently, according to the present embodiment, it becomes possible to acquire basically the same functions and effects as in the first embodiment.

### [3rd Embodiment]

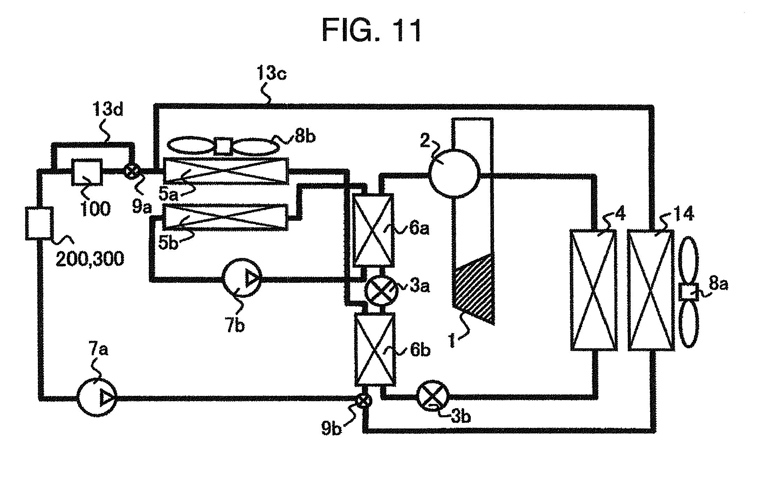

Referring to Fig. 11, the explanation will be given below regarding a third embodiment of the thermodynamic cycle system set up on the EV 1000.

The present embodiment is an improved embodiment of the second embodiment. In the present embodiment, an outdoor heat exchanger 14 is provided on the bypass pipe 13c. The outdoor heat exchanger 14 is deployed in a side-by-side manner with the outdoor heat exchanger 4 such that the exchanger 14 is deployed on the upstream side of the outdoor heat exchanger 4 with reference to the flow of the air sent by the fan 8a. Based on this deployment, the outdoor heat exchanger 14 performs the heat exchange between the air sent by the fan 8a and the cooling liquid flowing through the bypass pipe 13c. Also, in the present embodiment, the three-way valve 9b is deployed between the pump 7a and the intermediate heat exchanger 6b. Thanks to this deployment of the valve 9b, it is made possible to cause the cooling liquid before being heat-exchanged by the intermediate heat exchanger 6b to flow through the bypass pipe 13c.

The other configurations are basically the same as those in the second embodiment. Accordingly, the same reference numerals are affixed to the same configurations as those in the second embodiment, and thus the explanation thereof will be omitted.

Also, each operation in the present embodiment at the time of its cooling, heating, cooling-dehumidifying, or heating-dehumidifying operation is the same as the one in the second embodiment.

According to the present embodiment explained so far, as is the case with the second embodiment, it becomes possible to perform not only the air conditioning of vehicle, but also the temperature adjustment of each heat-liberation component. Consequently, according to the present embodiment, it becomes possible to acquire basically the same functions and effects as in the second embodiment.

Also, according to the present embodiment, at the time of its cooling operation, the heat of the heat-liberation components can be directly liberated out into the outdoor air without the intervention of the refrigeration cycle system. Consequently, according to the present embodiment, it becomes possible to implement an enhancement in the degree-of-freedom of the thermodynamic cycle system.

### (4th Embodiment)

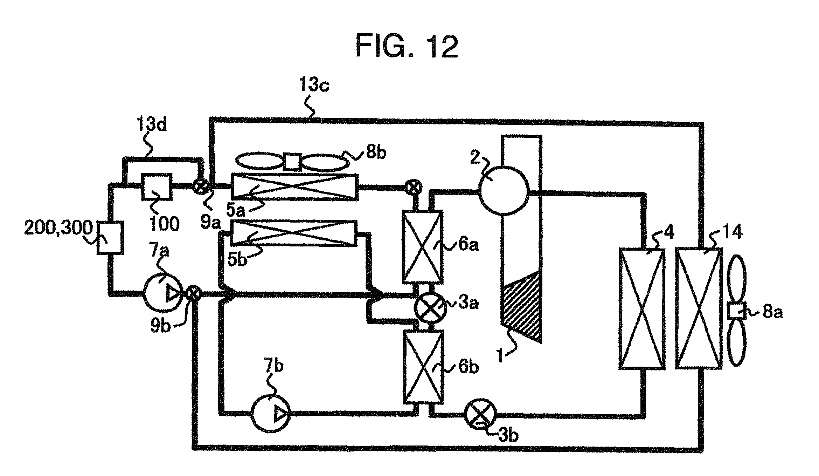

Referring to Fig. 12, the explanation will be given below concerning a fourth embodiment of the thermodynamic cycle system set up on the EV 1000.

The present embodiment is an embodiment which is implemented by improving the first embodiment on the basis of a concept similar to the one in the third embodiment. In the present embodiment, the outdoor heat exchanger 14 is provided on the bypass pipe 13c. The outdoor heat exchanger 14 is deployed in a side-by-side manner with the outdoor heat exchanger 4 such that the exchanger 14 is deployed on the upstream side of the outdoor heat exchanger 4 with reference to the flow of the air sent by the fan 8a. Based on this deployment, the outdoor heat exchanger 14 performs the heat exchange between the air sent by the fan 8a and the cooling liquid flowing through the bypass pipe 13c. Also, in the present embodiment, the three-way valve 9b is deployed between the pump 7a and the intermediate heat exchanger 6a. Thanks to this deployment of the valve 9b, it is made possible to cause the cooling liquid before being heat-exchanged by the intermediate heat exchanger 6a to flow through the bypass pipe 13c.

The other configurations are basically the same as those in the first embodiment. Accordingly, the same reference numerals are affixed to the same configurations as those in the first embodiment, and thus the explanation thereof will be omitted.

Also, each operation in the present embodiment at the time of its cooling, heating, cooling-dehumidifying, or heating-dehumidifying operation is the same as the one in the first embodiment.

According to the present embodiment explained so far, as is the case with the first embodiment, it becomes possible to perform not only the air conditioning, but also the temperature adjustment of each heat-liberation component. Consequently, according to the present embodiment, it becomes possible to acquire basically the same functions and effects as in the first embodiment.

Also, according to the present embodiment, at the time of its cooling operation, the heat of the heat-liberation components can be directly liberated out into the outdoor air without the intervention of the refrigeration cycle system. Consequently, according to the present embodiment, it becomes possible to implement an enhancement in the degree-of-freedom of the thermodynamic cycle system.

It should be further understood by those skilled in the art that although the foregoing description has been made on embodiments of the invention, the invention is not limited thereto and various changes and modifications may be made without departing from the spirit of the invention and the scope of the appended claims.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A moving vehicle thermodynamic cycle system, comprising:
a refrigeration cycle system through which a refrigerant flows;
a first heat-transferring system through which a heat-transferring medium flows, said heat-transferring medium being used for adjusting temperatures of heat-liberation components (100, 200, 300);
a second heat-transferring system through which a heat-transferring medium flows, said heat-transferring medium being used for adjusting an indoor air state;
a first heat exchanger (6a) provided between said refrigeration cycle system and said first heat-transferring system, and performing heat exchange between said refrigerant and said heat-transferring medium;
a second heat exchanger (6b) provided between said refrigeration cycle system and said second heat-transferring system, and performing heat exchange between said refrigerant and said heat-transferring medium;
an indoor heat exchanger (5a) provided in said first heat-transferring system, and performing heat exchange between said air taken into said indoor side and said heat-transferring medium; and
an indoor heat exchanger (5b) provided in said second heat-transferring system, and performing heat exchange between said air taken into said indoor side and said heat-transferring medium.

2. The moving vehicle thermodynamic cycle system according to Claim 1, wherein
said first heat exchanger (6a) and said second heat exchanger (6b) are deployed in series with said refrigeration cycle system,
said moving vehicle thermodynamic cycle system, further comprising:
a pressure-reducing valve (3a) for expanding said refrigerant, said pressure-reducing valve (3a) being provided between said first heat exchanger (6a) and said second heat exchanger (6b) on a refrigerant-flowing channel (12) of said refrigeration cycle system.

3. The moving vehicle thermodynamic cycle system according to Claim 1 or 2, wherein
said heat-liberation components (100, 200, 300) are driving components for driving said moving vehicle.

4. The moving vehicle thermodynamic cycle system according to at least one of Claims 1 to 3, wherein
said first heat-transferring system further comprises an outdoor heat exchanger (5a) for performing heat exchange between said heat-transferring medium and said outdoor air.

5. An electric vehicle (1000), comprising:
an rotating electric machine (200) coupled to wheels (20) of the vehicle;
a battery (100) that constitutes a driving power-supply for said rotating electric machine (200);
a power conversion device (300) for controlling said driving of said rotating electric machine (200) by converting DC power into AC power, and feeding said AC power into said rotating electric machine (200), said DC power being fed from said battery (100); and
a thermodynamic cycle system for adjusting temperatures of said rotating electric machine (200), said battery (100), and said power conversion device (300), and adjusting an indoor air state, wherein
said thermodynamic cycle system, comprises:
a refrigeration cycle system through which a refrigerant flows;
a first heat-transferring system through which a heat-transferring medium flows, said heat-transferring medium being used for adjusting said temperatures of heat-liberation components including said rotating electric machine (200), said battery (100) and said power conversion device (300);
a second heat-transferring system through which a heat-transferring medium flows, said heat-transferring medium being used for adjusting said indoor air state;
a first heat exchanger (6a) provided between said refrigeration cycle system and said first heat-transferring system, and performing heat exchange between said refrigerant and said heat-transferring medium;
a second heat exchanger (6b) provided between said refrigeration cycle system and said second heat-transferring system, and performing heat exchange between said refrigerant and said heat-transferring medium;
an indoor heat exchanger (5a) provided in said first heat-transferring system, and performing heat exchange between said air taken into said indoor side and said heat-transferring medium; and
an indoor heat exchanger (5b) provided in said second heat-transferring system, and performing heat exchange between said air taken into said indoor side and said heat-transferring medium.
